# EUROPÄISCHE PATENTSCHRIFT

(11) **EP 0 618 026 B1**
(45) Veröffentlichungstag und Bekanntmachung des Hinweises auf die Patenterteilung: **29.10.1997**
(21) Anmeldenummer: 94102033.1
(22) Anmeldetag: 10.02.1994
(51) Int. Cl.: B22D 17/32

(54) **Verfahren zur Ermittlung von optimalen Parametern eines Giessprozesses insbesondere an Druckgiessmaschinen**
Process for detecting optimal parameters of a casting process, especially of a die-casting process
Procédé pour déterminer des paramètres optimaux pour un procédé de coulée notamment pour des machines à coulée sous pression

(30) Priorität: 31.03.1993 DE 4310332
(43) Veröffentlichungstag der Anmeldung: 05.10.1994
(73) Patentinhaber: MASCHINENFABRIK MÜLLER-WEINGARTEN AG, D-88250 Weingarten (DE)
(72) Erfinder: Frey, Rolf, D-73650 Winterbach (DE)
(74) Vertreter: Patentanwälte Eisele, Otten & Roth

(56) Entgegenhaltungen:
- EP-A- 0 126 174
- EP-A- 0 481 413
- DE-C- 3 622 822

## Beschreibung

Die Erfindung betrifft ein Verfahren zur Ermittlung von optimalen Parametern eines Gießprozesses insbesondere an Druckgießmaschinen oder dergleichen nach dem Oberbegriff des Anspruchs 1.

Aus der Literaturstelle Gießerei 68 (1981) Nr. 18, Seite 531 ff.) ist eine automatische Gießprozeßüberwachung beim Druckgießen bekanntgeworden, die das prinzipielle Verfahren der Druckgießsteuerung aufzeigt. Dabei gehen die bis dahin bekannten Gießprozeßüberwachungssysteme davon aus, daß während des laufenden Gießprozesses gemessene Istwerte der verschiedensten Parameter mit vorgegebenen Sollwerten verglichen und im gleichen oder nachfolgenden Gießzyklus gegebenenfalls Korrekturen zur Anpassung z. B. der Istwertkurve an die Sollwertkurve durchgeführt werden.

Bei einem anderen, in der DE 31 11 425 C2 beschriebenen Verfahren werden in einer ersten Lernphase während eines Arbeitsablaufes einer Werkzeugmaschine mehrere aufeinanderfolgende Werte einer bestimmten Betriebsgröße gespeichert und unter Berücksichtigung zulässiger Toleranzabweichungen daraus Grenzwerte gebildet. In einer nachfolgenden Überwachungsphase wird anschließend ermittelt, ob die dann auftretenden Werte dieser Betriebsgröße diese Grenzwerte unter- oder überschreiten. Dabei wird zur Bildung des Grenzwertes für die Überwachungsphase entweder der Maximalwert oder der Minimalwert oder ein Durchschnittswert der in der Lernphase gespeicherten Werte benutzt. Ziel dieser bekannten Lehre ist es, eine Werkzeugmaschine dann stillzulegen, wenn bei deren Betrieb eine Betriebsgröße den so gefundenen Grenzwert über- bzw. unterschreitet.

Bei der Regelung insbesondere auch von Druckgußmaschinen ist die Erfassung und Abspeicherung von Verfahrensparametern, sowie die Bildung von Referenzwerten mit Toleranzintervallen demnach bekannt. So beschreibt beispielsweise auch die DE 36 22 822 C2, von der der Oberbegriff des Anspruchs 1 ausgeht, ein Verfahren zur Steuerung einer Maschine mit entsprechenden Steuerwerten, wobei die Betriebsbedingungen der Maschine erfaßt, Steuerparameter abgespeichert und die Steuerwerte aufgrund der erfaßten Betriebsbedingungen ermittelt werden, unter deren Verwendung die Maschine gesteuert wird.

In der Praxis werden vielfältige Versuche dahingehend unternommen, die Abhängigkeit mehrerer Parameter untereinander, deren Einstellungen sich beim Betrieb einer Fertigungsanlage auf die Güte eines Endproduktes auswirken, regeltechnisch in den Griff zu bekommen. Insbesondere beim Druckgießverfahren gibt es außerordentlich viele solcher Parameter, wie beispielsweise die Schmelztemperatur, die Dosiermenge, die Beschleunigung bzw. Geschwindigkeit während der verschiedenen Phasen des Gießprozesses, die Kraft, die an der Gießkolbenstange anliegt, die Umschaltpunktlage zwischen den einzelnen Phasen, der Speicherdruck bei Beginn der zweiten Phase, die Position des Kolbens beim Umschaltpunkt, die Formtemperaturen, die Auswerferkraft, die Schmiermittelmengen pro Düse, die Sprühzeiten, die Zusammensetzung der Schmelze usw.. Einige dieser Parameter sind auch in der eingangs erwähnten Druckschrift "Gießerei ..." erwähnt.

Die Korrelation zwischen solchen Größen untereinander und der Güte des gefertigten Teils sind so komplex, daß auch in den modernsten Anlagen ein unerwünscht hoher Anteil an Ausschußteilen entstehen kann.

Aus einem weiterhin bekannten Verfahren zur Überwachung von Einspritzformungsvorgängen bei der Herstellung von Kunststoffteilen gemäß der EP 0 126 722 B1 werden Parameterwerte beim Herstellungsprozeß als Referenzdaten zur Bildung einer Referenzkurvenform für solche hergestellten Produkte verwendet, die als Gußartikel mit noch guter Qualität festgelegt werden. Auch bei diesem Verfahren werden dann in der späteren Serienfertigung die gemessenen Istdaten mit den vorgegebenen Referenzdaten der Parameterwerte verglichen, wobei Toleranzgrenzen die noch zulässige Abweichungen bestimmen.

Die Wechselwirkungseffekte zwischen den einzelnen Gießparametern sind demnach bekannt. Um ein befriedigendes Druckgießergebnis zu erhalten, wird dennoch bis heute beim Einfahren einer neuen Druckgießform eine umfangreiche Experimentierphase vorausgeschaltet, um brauchbare Einstell- und Referenzwerte für die spätere Serienfertigung zu erhalten. Diese Experimentierphase wird durch manuelles Eingeben der verschiedensten Parameter vollzogen, d. h. der eigentlichen Serienfertigung wird eine Versuchsfertigung mit manuell eingegebenen, verschiedenen Daten bzw. Datensätzen von Parametern vorgeschaltet.

Der Erfindung liegt die Aufgabe zugrunde, eine Optimierung des Herstellungsprozesses insbesondere von Druckgießartikel vorzuschlagen, wobei insbesondere eine mühsame manuelle Eingabe von Gießparametern in den Werkzeugdatenspeicher zur Ermittlung von brauchbaren Referenzdaten entfallen und das Abarbeiten der verschiedenen Parametersätze an der Maschine automatisch erfolgen soll.

Diese Aufgabe wird ausgehend von einem Verfahren der einleitend bezeichnenden Art durch die kennzeichnenden Merkmale des Anspruchs 1 gelöst. In den Unteransprüchen sind vorteilhafte und zweckmäßige Weiterbildungen des Verfahrens nach Anspruch 1 enthalten.

Um ein gezieltes Auffinden von optimierten Gießparametern zu erreichen, wird demzufolge vorgeschlagen, daß die Einstellung der Gießparameter an der Gießmaschine mittels eines Optimierungsprogrammes automatisch durchgeführt wird. Dabei erfolgt ein automatisches Abarbeiten von vorgegebenen Parameterdatensätzen mittels eines Optimierungsprogrammes an der Arbeitsmaschine, so daß eine manuelle Experimentierphase beim Einfahren einer neuen Gießform entfällt. Dabei hat ein systematisches Abarbeiten der Datensätze mittels eines logischen Optimierungsprogrammes den Vorteil, daß das Auffinden von optimalen Datensätzen für bessere Gießergebnisse in kürzerer Zeit ermöglicht wird. Hierdurch ist eine Reduzierung des Ausschusses bei der späteren Serienfertigung durch bessere Einstellung der Maschine möglich. Es können weiterhin genauere Erkenntnisse der maschinenabhängigen Gießparameter bezogen auf ein bestimmtes Gießteil erlangt werden. Dabei besteht die Möglichkeit zur Ermittlung von praxisgerechten Toleranzgrenzen der Gießparameter.

Durch das erfindungsgemäße Verfahren hat der Maschinenbediener keinen Einfluß mehr auf die Vorproduktionsphase, da dies von dem Optimierungsprogramm selbst durchgeführt wird. Dabei arbeitet das Optimierungsprogramm nach technologischen Gesichtspunkten, d. h. technisch sinnvolle Parameterdatensätze werden eingegeben und systematisch abgearbeitet. Die Anzahl der Gießzyklen in einem solchen Optimierungsprogramm mit jeweils konstanten Gießparameter-Datensätzen ist dabei vorwählbar. Hierbei kann auch die Anzahl der Kombinationen der Gießparameter vorgewählt werden. Dabei wird die Anzahl der Kombinationen der Gießparameter automatisch nach einer festgelegten Versuchsmethodik bestimmt. Schließlich erfolgt eine automatische Auswertung des Optimierungsprogramms durch Bewertung der teilespezifischen Qualitätsmerkmale nach bestimmten Qualitätskriterien, um optimale Gießparameter-Datensätze für die spätere Serienfertigung zu erhalten.

Durch die Systematik des Optimierungsprogramms werden auch Parameterkombinationen gefahren, die bei der manuellen Einstellung nicht naheliegend sind und trotzdem überraschende positive Ergebnisse liefern.

Der Erfindung liegt demnach der Kerngedanke zugrunde, daß ein oder mehrere bestimmte Datensätze zur Bestimmung von Teilen guter Qualität aufgefunden werden müssen. Dabei wird eine Vielzahl von möglichen Datensätzen zur Auffindung optimierter Gießparameter im Werkzeugdatenspeicher der Gießmaschinensteuerung abgelegt und später in einen Anwendungsspeicher der Maschinensteuerung übernommen. Die Eingabe der Daten kann vorzugsweise über einen Bildschirm bzw. über Datenträger erfolgen. Das Optimierungsprogramm durchfährt dann mit dem vorgegebenen Werkzeugdatensatz eine bestimmte Anzahl von Gießzyklen, wobei in Abhänigkeit von der jeweils aktuellen Gießzyklusnummer die Werkzeugdatensätze aus dem Werkzeugdatenspeicher automatisch in einen Anwendungsspeicher der Maschinensteuerung übertragen werden. Damit werden wechselnde Gießparameter-Datensätze nach einem vorgegebenen Optimierungsprogramm an der Maschine automatisch eingestellt und einer bestimmten, vorgegebenen Anzahl von Gießzyklen zugeordnet und abgearbeitet. Hierdurch ist eine systematische Festlegung des Versuchsprogramms in übersichtlicher Weise möglich.

Eine weitere Besonderheit der Erfindung liegt in der automatischen Auswahl von einzelnen Gießparametern zu einem Datensatz und eine mögliche Kombination dieser Parameter. Dabei sollen bestimmte Gießparameter innerhalb vorgegebener minimaler und/oder maximaler Grenzen automatisch zu einem systematischen Versuchsprogramm zusammengestellt werden. Die maximal möglichen Kombinationen von Gießparametern werden dann automatisch in den Werkzeugdatenspeicher einer Arbeitsmaschine eingeschrieben. Die Steuerung errechnet dann die notwendige Anzahl der Optimierungsprogrammdurchläufe und legt diese im Werkzeugdatenspeicher ab. Damit ist gewährleistet, daß mit geringem Aufwand an Eingaben sämtliche Kombinationsmöglichkeiten der Gießparameter durchgefahren werden. Die Arbeitsmaschine arbeitet dann mittels des Optimierungsprogramms die einzelnen Läufe für die kombinierten Datensätze durch.

Die Erfindung sieht weiterhin vor, daß die Auswertung der durchfahrenen Versuchsreihen aus dem Optimierungsprogramm in einem Qualitätsuntersuchungsschritt erfolgt. Dabei kann die Auswertung der Ergebnisse mittels bekannten Meßmethoden erfolgen. Als Ergebnis stellen sich dann Informationen zur Verfügung, die optimale Parameterkombinationen zur Herstellung Teile guter Qualität bei gleicher oder verschieden großer Gewichtung von unterschiedlichen Parametern liefern. Dabei kann einfach festgestellt werden, welcher der geprüften Gießparameter einen signifikanten Einfluß auf die Qualität des Gießteils hat, wobei die Größe dieses Einflusses bestimmbar ist. Weiterhin kann eine Festlegung vernünftiger Toleranzen für die Parameter erfolgen. Dabei ist es vorteilhaft, daß problemlos festgestellt werden kann, welcher prozentuale Anteil der geprüften Gießparameter an der Qualität des Druckgießteils hat.

Sofern die Kombination der verschiedenen Gießparameter keine signifikante Änderung der Qualität des Druckgießteils erbringt, kann hierdurch eine Festlegung von gießtechnischen Änderungen an der Form erfolgen oder z. B. auch der Wärmehaushalt der Form verändert werden.

Weitere Einzelheiten und Vorteile der Erfindung werden durch die nachfolgenden Zeichnungen und Diagramme in Verbindung mit der Beschreibung von Ausführungsbeispielen erläutert.

Es zeigen
- Fig. 1: einen schematisch dargestellten Werkzeugdatenspeicher zur Eingabe von Gießparameter-Datensätze und dem systematischen eigenständigen Ablauf des Optimierungsprogramms zur Ermittlung optimaler Werte,
- Fig. 2: ein Flußdiagramm über den Ablauf des Optimierungsprogramms nach Fig. 1,
- Fig. 3: ein weiteres Ausführungsbeispiel für die Auswahl von Kombinationsmöglichkeiten von Einzelparametern zu einem Datensatz,
- Fig. 4: einen Werkzeugdatenspeicher mit automatischer Kombination der Parameterdatensätze nach Fig. 3,
- Fig. 5: eine automaische Bewertungsanalyse der abgefahrenen Parameterdatensätze nach Fig. 3 und 4 und
- Fig. 6: eine graphische Darstellung der Bewertungsergebnisse nach Fig. 5.

Nachfolgend wird die Erfindung anhand der Anwendung an einer Druckgießmaschine beschrieben.

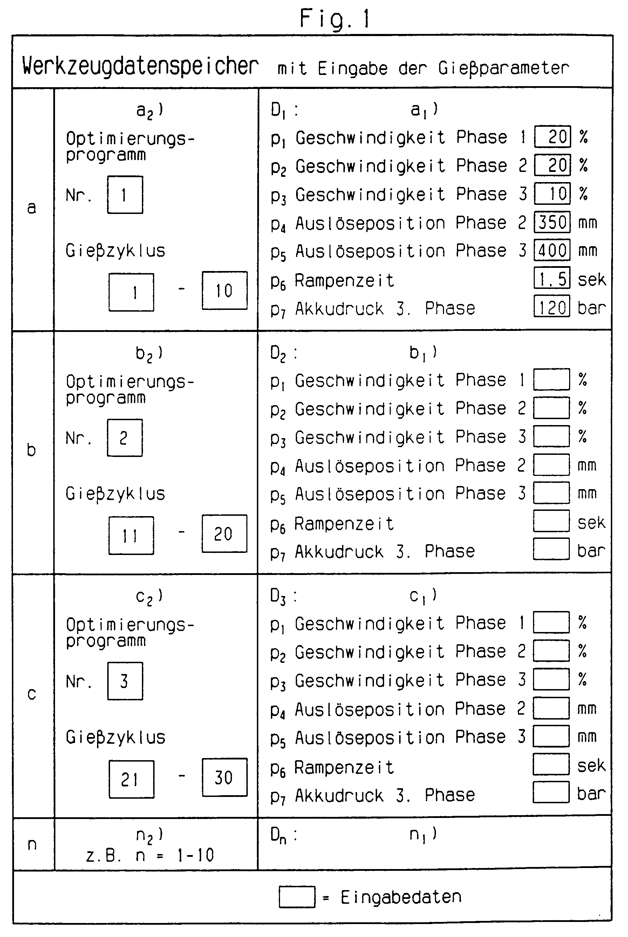

Die Fig. 1 zeigt ein Verfahren zur Ermittlung von optimalen Datensätzen von Gießparametern über eine systematische Versuchsreihe mittels eines Optimierungsprogrammes. Der oberste Block a zeigt in der rechten Spalte a₁ einen ersten Datensatz D₁, der beispielsweise aus sieben Einzelparametern p₁ bis p₇ besteht. Beispielsweise betrifft der Einzelparameter p₁ die Geschwindigkeit der ersten Phase (langsamer Vorlauf) des Gießkolbens, die beispielsweise 20 % der maximalen Gießkolbengeschwindigkeit betragen soll. Anstelle eines prozentualen Wertes kann auch ein Absolutwert der Geschwindigkeit eingegeben werden. Als nächster Parameterwert p₂ ist die Geschwindigkeit des Gießkolbens in der zweiten Phase (Formfüllhub), als Parameter p₃ die Geschwindigkeit in der dritten, d. h. der Nachdruckphase mittels Multiplikator angegeben. In der Fig. 1 sind weitere bekannte Parameter p₄ bis p₇ beispielhaft angegeben. Die rechts gezeichneten Kästchen bedeuten jeweils vorgegebene Eingabedaten für diesen ersten Datensatz D₁.

Beim herkömmlichen Druckgießverfahren erfolgt das Probieren zur Auffindung von optimalen Parametersätzen dadurch, daß mit einem solchen Datensatz D₁ eine bestimmte Anzahl von Gießzyklen durchfahren werden. Danach wird die Maschine abgeschaltet und die Teile einer manuellen Überprüfung auf Gut- und Schlechtteilen unterzogen. In einem nachfolgenden zweiten Arbeitsgang wird ein neuer Datensatz D₂ mit den Einzelparametern p₁ bis pₙ verwendet, wie er beispielsweise in der rechten Spalte des Blockes b gezeigt ist. Mit einem solchen, manuell eingegebenen zweiten Datensatz wird dann die Druckgießmaschine wiederum neu angefahren und eine bestimmte Anzahl von Gießzyklen durchfahren, bevor die Maschine wieder zur Überprüfung der Einzelteile abgeschaltet bzw. neu eingestellt wird. Dieser Vorgang wird mit Datensätzen bis zum Datensatz Dₙ wiederholt. Jedesmal wird die Maschine zwischen den einzelnen Probeläufen, d. h. zwischen den in Fig. 1 dargestellten Blöcke a bis n abgeschaltet bzw. der Gießzyklus unterbrochen bis Neueinstellungen an der Maschine vorgenommen worden sind. Durch diesen Stillstand der Maschine verändern sich aber die Maschinenparameter wie z. B. Formtemperatur, Metalltemperatur usw., so daß hierdurch Verfälschungen der Meßergebnisse eintreten können.

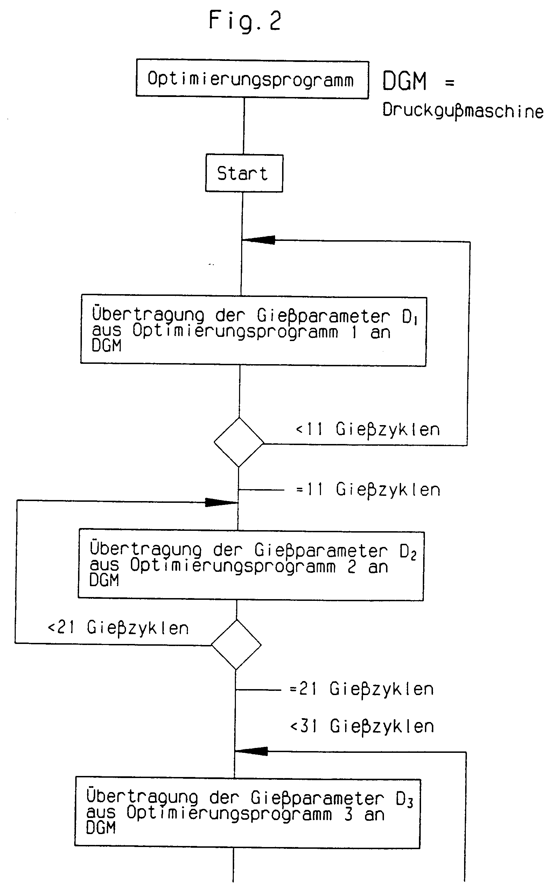

Gemäß der Darstellung nach Fig. 1 sowie dem zugehörigen Flußdiagramm nach Fig. 2 erfolgt demzufolge nach der vorliegenden Erfindung die Ermittlung optimaler Gießparameter automatisch mittels eines Optimierungsprogrammes. Die in den rechten Blöcken a₁ bis n₁ dargestellten Datensätze D₁ bis Dₙ werden beispielsweise mittels einer Diskette oder eines sonstigen Datenträgers als vorbereitete Datensätze dem Werkzeugdatenspeicher eingegeben. Gemäß der linken Spalte a₂ des Blockes a in Fig. 1 überführt das Optimierungsprogramm den ersten Datensatz D₁ mit den Einzelparametern p₁ bis p₇ aus dem Werkzeugdatenspeicher in einen Anwendungsspeicher der Maschinensteuerung und fährt beispielsweise die Gießzyklen 1 bis 10 durch. Danach wird ohne einen Stillstand der Maschine durch das Optimierungsprogramm der Datensatz D₁ durch den Datensatz D₂ aus dem Block b ausgetauscht, mit anderen Parameterwerten p₁ bis p₇. Das Optimierungsprogramm fährt dann unter dem Programmdurchlauf 2 die Gießzyklen 11 bis 20, wie in der linken Spalte b₂ in Fig. 1 angegeben.

Ohne weiteren Stillstand der Maschine wird danach der Datensatz D₂ ausgetauscht durch den Datensatz D₃ im Block c₁ wiederum mit abgeänderten Einzelparametern p₁ bis p₇ und der Programmlauf 3 mit den Gießzyklen 21 bis 30 gemäß Block c₂ in Fig. 1 durchfahren. Dieser automatische Wechsel des jeweiligen Datensatzes wird fortgesetzt bis zum Datensatz Dₙ gemäß Block n₁ in Fig. 1 und das Optimierungsprogramm durchfährt wiederum die vorgegebene Anzahl von Gießzyklen. Gemäß der Darstellung im Block n₂ kann dieser Vorgang beispielsweise 10 Programmschritte umfassen.

In Fig. 2 ist der Ablauf des Optimierungsprogramms nach Fig. 1 nochmals in einem Flußdiagramm dargestellt. Nach dem Start der Druckgießmaschine DGM erfolgt eine Übertragung des ersten Gießparameterdatensatzes D₁ aus dem Werkzeugdatenspeicher, um mit dem Optimierungsprogrammschritt 1 die Druckgußmaschine mit einem ersten Gießzyklus zu betreiben. Gemäß dem Flußdiagramm wird dieser Vorgang bis zu 10 Gießzyklen in einer ersten Schleife wiederholt.

Sind 10 Gießzyklen beendet, so holt sich das Optimierungsprogramm in einem Optimierungsprogrammschritt 2 automatisch aus dem Werkzeugdatenspeicher den zweiten Gießparameterdatensatz D₂ und durchfährt mit diesem Parametersatz D₂ die weiteren Gießzyklen 11 bis 20. Dies ist mit der zweiten Schleife in Fig. 2 dargestellt.

Der Vorgang wird automatisch fortgesetzt, durch eine automatische Entnahme der folgenden Gießparameterdatensätze D₃ bis Dₙ mit einem Durchfahren der Optimierungsprogrammschritte 3 bis n.

Durch diesen automatischen Vorgang des Durchfahrens von einer bestimmten Anzahl von Gießzyklen mit einem fest vorgegebenen Parametersatz ohne Abschaltung der Druckgießmaschine mittels des Optimierungsprogrammes können Veränderungen der periphären Gießparameter ausgeschlossen werden, so daß dies den praktischen Gegebenheiten der Serienfertigung entspricht.

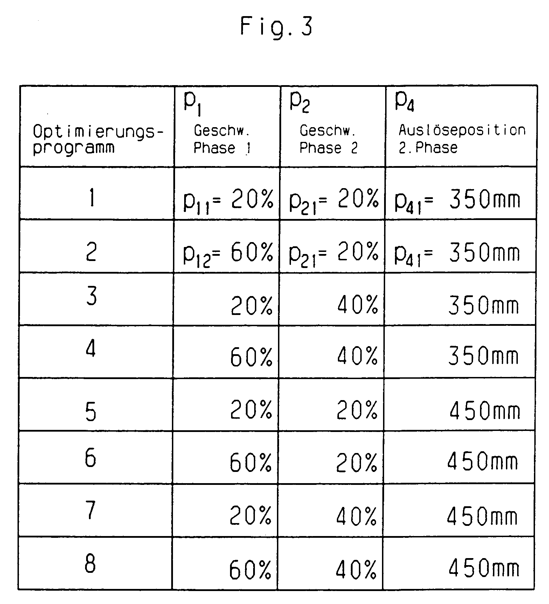

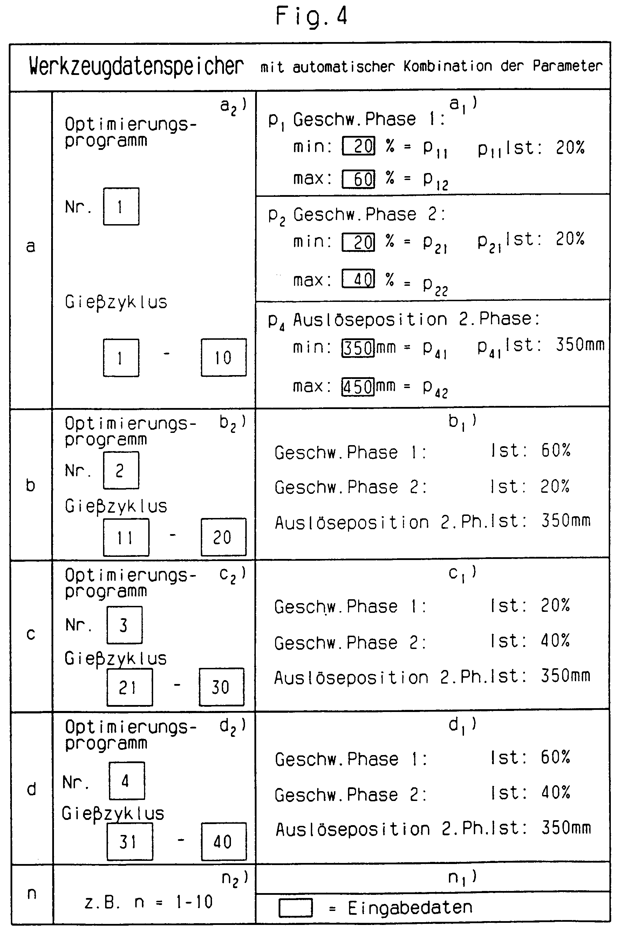

Die Darstellung in Fig. 3 und 4 zeigt eine Variation des Einsatzes des Optimierungsprogrammes dahingehend, daß eine bestimmte Kombination von ausgewählten Parametern in nacheinanderfolgenden Optimierungsprogrammschritten automatisch durchfahren werden. Gibt man in der Darstellung nach Fig. 1 und 2 Parameterdatensätze D₁ bis Dₙ vor und durchfährt automatisch hintereinander die einzelnen, in ihrer Anzahl vorgegebenen Gießzyklen, so werden demgegenüber bei der Ausführung der Erfindung nach Fig. 3 und 4 bestimmte Einzelparameter in verschiedenen Kombinationen miteinander durchfahren.

Als Parameter p₁ wird beispielsweise die Geschwindigkeit der Phase 1 festgelegt auf die Werte p₁₁ = 20 % und p₁₂ = 60 %, um beispielsweise den minimalen und den maximalen Einfluß der Geschwindigkeitsphase 1 zu erfassen. Gleichermaßen kann der Parameterwert p₂ festgelegt werden auf die Werte p₂₁ = 20 % und p₂₂ = 40 % der jeweils minimalen und maximalen Gießkolbengeschwindigkeit. Selbstverständlich können auch beliebige Zwischenwerte ausgewählt werden. Die Auslöseposition des Schusses während der zweiten Phase des Gießprozesses ist in Fig. 1 mit dem Parameter P₄ angegeben. Wählt man diesen Einzelparameter p₄ beim Ausführungsbeispiel nach Fig. 3 und 4 aus, so wird dieser Wert variiert zwischen den Einzelwerten p₄₁ = 350 mm und P₄₂ = 450 mm als Stellung des Gießkolbens in der zweiten Druckgießphase.

Gemäß der Darstellung in Fig. 4, oberer Block a, rechte Spalte a₁ werden demzufolge dem Werkzeugdatenspeicher beispielsweise diese beiden vorgewählten Werte der Einzelparameter p₁, p₂, p₄ eingegeben, wobei das Optimierungsprogramm eine bestimmte Kombination dieser Werte als Istwerte auswählt. Dies ist beispielsweise gemäß der Darstellung in Fig. 3 ein erster Programmschritt 1 des Optimierungsprogramms mit den Istwerten p₁₁ = 20 %, p₂₁ = 20 % und P₄₁ = 350 mm, wie dies auch in Fig. 4, oberer Block a in der rechten Spalte a₁ dargestellt ist. Gemäß der Darstellung in Fig. 4, Block a, linke Spalte a₂ durchfährt das Optimierungsprogramm in dem ersten Programmschritt 1 die Gießzyklen 1 bis 10 mit diesem vorgegebenen Parameterdatensatz p₁₁, p₂₁, p₄₁. Sodann wechselt das Optimierungsprogramm selbständig die Kombination der eingegebenen Daten beispielsweise zu dem in Fig. 3 dargestellten zweiten Programmschritt mit der Kombination 60 %, 20 %, 350 mm und durchfährt gemäß dem Programmschritt 2 in der Spalte b in Fig. 4 weitere Gießzyklen 11 bis 20. Bei der Auswahl der vorgegebenen Parametern ergeben sich z. B. die in Fig. 3 dargestellten acht Variationsmöglichkeiten zwischen den einzelnen Parametern, die gemäß der Darstellung in Fig. 4 hintereinander vom Optimierungsprogramm in den Blöcken a bis n durch jeweils eine vorgegebene Anzahl von Gießzyklen automatisch durchfahren werden.

Gemäß der Darstellung nach Fig. 3 und 4 können demnach die verschiedensten Kombinationen von Einzelparametern hintereinander durchfahren werden, ohne daß die Druckgießmaschine zum Stillstand kommt. Dabei wird dem Optimierungsprogramm lediglich die gewünschte Anzahl der Gießzyklen mit jeweils konstantem Parameterdatensatz eingegeben. Weiterhin werden die gewünschten Parameter selber über einen Datenträger der Maschine zugeführt. Nach Eingabe dieser Daten erfolgt die Kombination und Abspeicherung der möglichen Parameter automatisch, wobei die Steuerung die notwendige Anzahl der Optimierungsprogramme selbst errechnet und durchfährt.

Die vorliegende Erfindung unterscheidet sich demnach zunächst in einem vollautomatischen Durchfahren von vorgegebenen Parameterdatensätzen mittels eines Optimierungsprogramms, ohne daß die Maschine dazwischen zum Stillstand kommt. Dies kann beispielsweise ein Ablauf gemäß der Darstellung in Fig. 1 und 2 oder gemäß der Darstellung in Fig. 3 und 4 sein.

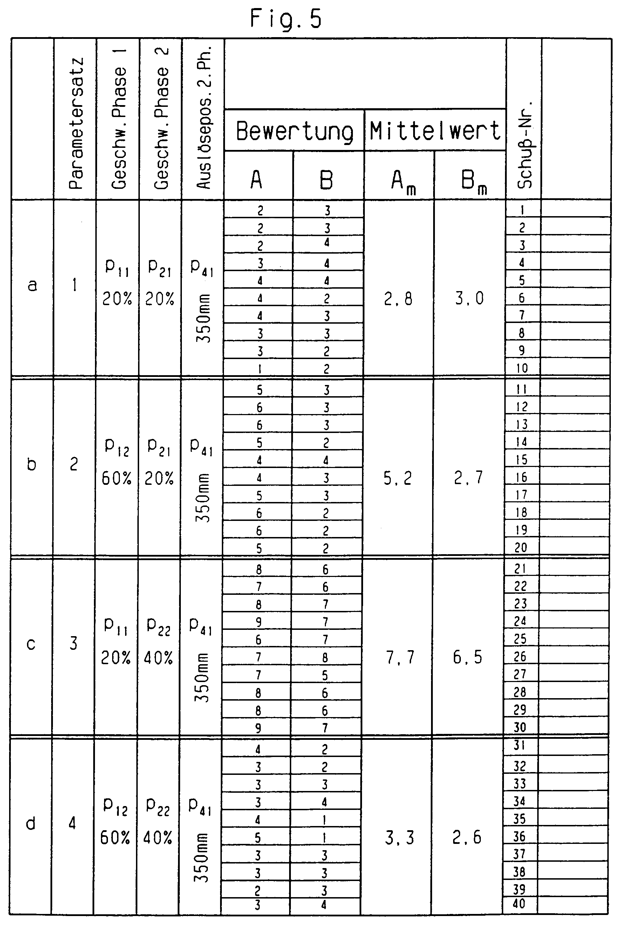

Sind die Gießzyklen mit den jeweiligen Parameterdatensätzen durchfahren, so kann eine automatische Auswertung dieser hergestellten Teile erfolgen. Dabei werden gemäß der Darstellung nach Fig. 5 verschiedene Bewertungskriterien herangezogen, die beispielsweise mit den Buchstaben A und B gekennzeichnet sind. Beispielsweise kann ein erstes Bewertungskriterium A das Vorhandensein von Lunkern in einem bestimmten Bereich des hergestellten Werkstücks sein, während das Bewertungskriterium B beispielsweise die Beschaffenheit der Oberflächenqualität ist. Eine geeignete Meßmethode übernimmt die Erfassung der Qualitätsprüfung, wobei Bewertungsnoten vergeben werden. Ein stark mit Lunker behaftetes gemessenes Teil erhält beispielsweise die schlechte Bewertung 1, ein frei von Lunker bestehendes Teil die sehr gute Bewertung 10. Dabei kann die Meßmethode Bereiche auswählen, in welchen die jeweiligen Bewertungsnoten oder -ziffern vergeben werden. Ein mit 1 bewertetes Teil ist auf jeden Fall ein Ausschußteil, ein mit 10 bewertetes Teil entspricht allen Anforderungen.

In Fig. 5 ist beispielsweise in dem obersten Block a der in Fig. 3 und 4 dargestellte erste Programmschritt des Optimierungsprogrammes dargestellt, mit dem ersten Parametersatz 1 und dem ersten Parameter p₁₁ = 20 %, p₂₁ = 20 % und dem Parameter p₄₁ = 350 mm. Mit diesem Parameterdatensatz im Block a wurden 10 Gießzyklen 1 bis 10 durchgeführt, die in Fig. 5 mit "Schuß-Nr." angegeben sind.

Der erste Schuß hat für das Bewertungskriterium A, z. B. das Vorhandensein von Lunkern die Bewertungsnote 2, bezüglich dem zweiten Bewertungskriterium B, die Beschaffenheit der Oberfläche die Benotung 3 erhalten, wobei die erhaltenen Meßwerte die Benotung ergeben. Wie die Darstellung der Bewertungsnoten in Block a deutlich aufzeigt, schwanken diese Bewertungsnoten der Gießzyklen 1 bis 10 beispielsweise für das Bewertungskriterium A zwischen den Noten 1 bis 4 und für das Bewertungskriterium B zwischen den Noten 2 und 4, obwohl es sich jeweils um den identischen Parameterdatensatz 1 handelt. Die automatisch festgestellten Bewertungsnoten werden vom Rechner zu einer Mittelwertnote geführt, die beim Parameterdatensatz 1 zu einem Mittelwert des Bewertungskriteriums A = 2,8 und des Bewertungskriteriums B = 3,0 führt.

Dieses Bewertungsschema wird für alle nachfolgenden Parameterdatensätze 2 bis 8 des Ausführungsbeispiels nach Fig. 3 und 4 durchgeführt, wodurch sich die in der Spalte "Mittelwert" dargestellten Mittelwertnoten ergeben. Beispielsweise sind im verwendeten Parameterdatensatz 3 entsprechend dem Block c Bewertungsergebnisse der Bewertungskriterien A und B enthalten, die eine hohe Güte versprechen und zu den hohen Mittelwertnoten A = 7,7 und B = 6,5 führen. Hieraus ergibt sich, daß beispielsweise ein solcher Datensatz eine hohe Qualität der hergestellten Teile ergibt, so daß ein solcher Datensatz bei der Serienfertigung bevorzugt zur Anwendung kommt.

Aus der Darstellung nach Fig. 5 ergibt sich weiterhin die Möglichkeit, die einzelnen Parameter zu gewichten, d. h. je nach ihrer Relevanz weniger oder stärker bei der Auswertung zu bewerten. Führt beispielsweise die Auswahl des ersten Parameters der Geschwindigkeitsphase 1 p₁₁ = 20 % zu wenig aussagekräftigen Ergebnissen, so kann dieser Parameter bei der Auswertung der ermittelten Werte und insbesondere auch bei der Auswertung und Festlegung von zulässigen Toleranzgrenzen weniger stark berücksichtigt werden, als beispielsweise ein Parameterwert, der sich sehr stark auf die Qualität des Produkts auswirkt.

Die Auswertung der Meßergebnisse der einzelnen Datensätze erfolgt demzufolge nach bekannten Kriterien für die Güte der hergestellten Teile, d. h. bestimmte Parameterdatensätze ergeben gute Teile, während andere schlechtere Teile zur Folge haben.

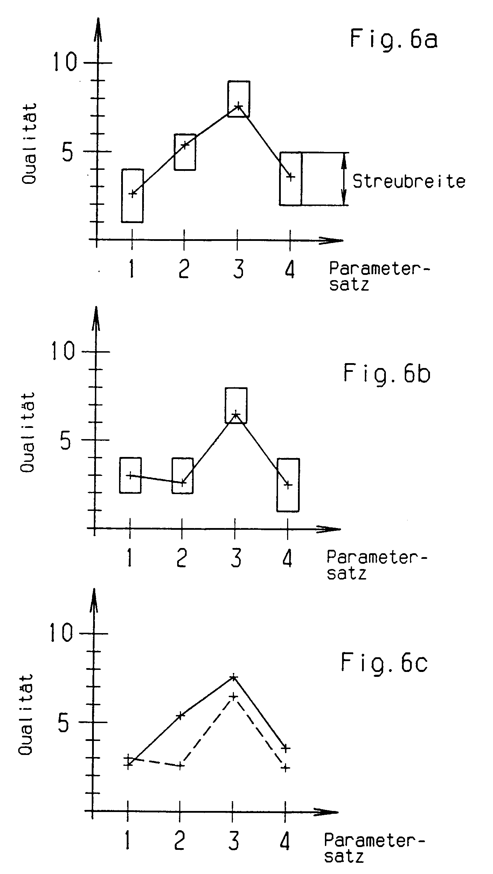

Die aus Fig. 5 ermittelten Mittelwerte der gemessenen Gießzyklen oder Schußnummern für die Bewertungskriterien A und B können in einer graphischen Darstellung zur Auswertung gebracht werden, wie dies in den Figuren 6a bis 6c dargestellt ist. Dabei zeigt die Fig. 6a beispielsweise die Bewertung des Qualitätskriteriums A, d. h. Vorhandensein von Lunkern im Produkt. Dabei ist auf der X-Achse der eingesetzte Parameterdatensatz und auf der Y-Achse die ausgewählte Bewertungsstufe angegeben. Hieraus ist ersichtlich, daß für den Parameterdatensatz 1 das Bewertungskriterium A zwischen den Noten 1 und 4 mit einer Mittelwertnote Aₘ = 2,8 schwankt, während das Bewertungskriterium A beim Parameterdatensatz 3 zwischen den Werten 7 und 9 mit einer Mittelwertnote 7,7 schwankt. Demzufolge stellt die graphische Darstellung nach Fig. 6a einen Ausdruck für die Qualität und die Güte des gemessenen Parameterdatensatzes dar. In diesem Fall zeigt sich wiederum, daß der Parameterdatensatz 3 mit einer geringen Streubreite zwischen 7 und 9 und einem Mittelwert von 7,7 einen optimalen Wert für das Kriterium A darstellt.

Das gleiche Schema ist in Fig. 6b für das Bewertungsmerkmal B "Oberflächenqualität" durchgeführt. Auch hier zeigt sich, daß der in Fig. 5 dargestellt dritte Parametersatz einen hohen Qualitätswert der Einzelbenotungswerte zwischen 5 und 8 darstellt, was zu einem Mittelwert Bₘ = 6,5 führt. Die anderen Parameterdatensätze liegen deutlich darunter.

Die in den Figuren 6a und 6b in einer Kurve dargestellten Mittelwertnoten der Bewertungskriterien A und B sind in der Fig. 6c nochmals zusammen dargestellt, wobei die obere Kurve das Qualitätsmerkmal A (Lunker) und die untere Kurve das Qualitätsmerkmal B (Oberflächengüte) darstellt.

Durch das beschriebene erfindungsgemäße Verfahren des automatischen Abarbeitens von Parameterdatensätzen mittels eines Optimierungsprogrammes an Druckgießmaschinen sind demnach eine Vielzahl von Vorteilen verbunden. Insbesondere entfallen die bei manueller Eingabe der Daten entstehenden Fehler durch den jeweiligen Stillstand der Druckgießmaschine, so daß ein Höchstmaß an reproduzierbaren Datensätzen ermittelbar ist, die eine hohe Qualität bei der Serienfertigung ergeben.

Die Erfindung ist nicht auf die beschriebenen und dargestellten Ausführungsbeispiele beschränkt. Sie umfassen auch vielmehr Ausgestaltungen im Rahmen der Patentansprüche.

## Patentansprüche

1. Verfahren zur Ermittlung von optimierten Parameterwerten eines Gießprozesses insbesondere an Druckgießmaschinen oder dergleichen, wobei bekannte Datensätze von Einzelparametern eines Gießzyklusses zur Verfügung stehen, dadurch gekennzeichnet, daß verschiedene Datensätze für ein Optimierungsprogramm in einem Werkzeugdatenspeicher der Gießmaschinensteuerung abgelegt werden und daß mittels dieses Optimierungsprogrammes nacheinander jeweils ein Datensatz aus dem Datenspeicher automatisch der Maschinensteuerung ohne manuelle äußere Einflußnahme und ohne Stillstand der Maschine übertragen wird und eine vorgegebene Anzahl von Probegießzyklen mit diesem Datensatz gefahren werden, daß die in den Probezyklen mit einem Datensatz hergestellten Erzeugnisse meßtechnisch auf ihre Qualität untersucht und in einer automatischen Qualitätskontrolle bewertet werden und daß optimale Parameterdatensätze einer Meßwertserie zur späteren Herstellung von Serienteilen verwendet werden.

2. Verfahren nach Anspruch 1, dadurch gekennzeichnet, daß die Parameterdatensätze (D₁ bis Dₙ) jeweils eine vorgegebene Anzahl von Einzelparametern (p₁ bis p₇) aufweist, die jeweils in einem Programmschritt (1 bis n) des Optimierungsprogrammes eine bestimmte, vorgegebene Anzahl von Gießzyklen durchfahren.

3. Verfahren nach Anspruch 1 oder 2, dadurch gekennzeichnet, daß die mittels des Optimierungsprogrammes abgefahrenen Datensätze (D₁ bis Dₙ) zu Probeprodukten führen, die innerhalb eines Programmlaufes mit einem bestimmten Datensatz nach vorgegebenen physikalischen Bewertungskriterien (A, B) mit bekannten Meßverfahren ausgewertet werden und daß die ermittelten Mittelwerte (Aₘ, Bₘ) jedes Programmschritts mit einem bestimmten Datensatz eine Aussage über die Güte der Produktqualität mit diesem Datensatz vermitteln.

4. Verfahren nach einem der vorhergehenden Ansprüche, dadurch gekennzeichnet, daß die Analyse der hergestellten Produkte mit jeweils einem Datensatz über eine bekannte Meßwerterfassung von physikalischen Eigenschaften des Produktes erfolgt und daß die Qualität der gemessenen Meßwerte zu einer Bewertungsnote führt, deren Mittelwert für jedes physikalische Bewertungskriterium für jeden Datensatz ermittelt wird.

5. Verfahren nach Anspruch 1, dadurch gekennzeichnet, daß verschiedene Einflußgrößen wie z. B. Geschwindigkeit Phase 1, Geschwindigkeit Phase 2, Auslöseposition in Phase 2 oder dergleichen in verschiedenen, abgestuften Werten zur Verfügung stehen, die jeweils in allen Kombinationen automatisch vom Rechner zu einem bestimmten Parameterdatensatz zusammengestellt werden und daß das Optimierungsprogramm jedes dieser kombinierten Parameterdatensätze in einem Programmschritt nacheinander zur Ermittlung optimaler Werte durchfährt, ohne Unterbrechung des gießtechnischen Ablaufes an der Druckgießmaschine oder dergleichen.

6. Verfahren nach einem der vorhergehenden Ansprüche, dadurch gekennzeichnet, daß die Bewertung der physikalischen Bewertungskriterien (A, B) in einem verschiedenen Bewertungsmaßstab je nach Gewichtung des einzelnen Parameters erfolgt, wobei sich stärker auswirkende Parameter eine höhere und sich weniger stark auswirkende Parameter eine niedrigere Gewichtung erhalten.

7. Verfahren nach einem der vorhergehenden Ansprüche, dadurch gekennzeichnet, daß die Qualitätskontrolle der hergestellten Probeteile mittels einer automatischen Meßanordnung für vorgegebene Meßwerte wie Lunkerbildung, Oberflächenbeschaffenheit, Bruchproben usw. erfolgt.

8. Verfahren nach einem der vorhergehenden Ansprüche, dadurch gekennzeichnet, daß nach automatischer Auswertung der Meßergebnisse der Probeabgüsse die Festlegung von qualitätsrelevanten Toleranzfelder für die Gießparameter erfolgt.

## Claims

1. Process for detecting optimized parameter values of a casting process especially on die-casting machines or the like, in which case known sets of data of individual parameters of a casting cycle are available, characterised in that different sets of data for an optimization programme are filed in a tool data memory of the casting machine control and that by means of this optimization programme a set of data is respectively transferred in succession from the data memory automatically to the machine control without external manual intervention and without stopping the machine and a predetermined number of test casting cycles is carried out with this set of data, that the products produced in the test cycles with a set of data are investigated as regards their quality by measuring techniques and evaluated in an automatic quality control and that optimum parameter data sets of a series of measured values are used for later production of mass-produced parts.

2. Process according to Claim 1, characterised in that the parameter data sets (D₁ to Dₙ) each has a predetermined number of individual parameters (p₁ to p₇), which respectively in a programme step (1 to n) of the optimization programme carry out a certain, predetermined number of casting cycles.

3. Process according to Claim 1 or 2, characterised in that the data sets (D₁ to Dₙ) run by means of the optimization programme lead to test products, which within a programme run with a certain data set are evaluated in accordance with given physical evaluation criteria (A, B) by known measuring methods and that the ascertained average values (Aₘ, Bₘ) of each programme step with a certain set of data provide evidence about the grade of the product quality with this set of data.

4. Process according to one of the preceding Claims, characterised in that the analysis of the products produced with respectively one set of data takes place by way of a known measured value monitoring of physical properties of the product and that the quality of the measured values leads to an evaluation mark, whereof the average value for each physical evaluation criterion is ascertained for each set of data.

5. Process according to Claim 1, characterised in that different limiting quantities, such as for example speed phase 1, speed phase 2, tripping position in phase 2 or the like are available in different, graduated values, which in each case in all combinations are combined automatically by the computer to form a given parameter data set and that the optimization programme runs through each of these combined parameter data sets in one programme step in succession to detect optimum values, without interrupting the technical casting process on the die-casting machine or the like.

6. Process according to one of the preceding Claims, characterised in that the evaluation of the physical evaluation criteria (A, B) takes place on a different evaluation scale according to the weighting of the individual parameter, parameters having a greater effect obtaining a higher weighting and parameters having a lesser effect obtaining a lower weighting.

7. Process according to one of the preceding Claims, characterised in that the quality control of the test parts produced takes place by means of an automatic measuring arrangement for given measured values such as shrink hole formation, surface quality, breaking tests etc.

8. Process according to one of the preceding Claims, characterised in that after the automatic evaluation of the measurement results of test castings, quality-relevant tolerance zones for the casting parameters are fixed.

## Revendications

1. Procédé pour déterminer les valeurs optimisées de paramètres d'un processus de fusion, en particulier sur des machines à coulée sous pression ou analogues, des jeux de données connus de paramètres individuels d'un cycle de coulée étant disponibles,
caractérisé en ce que différents jeux de données pour un programme d'optimisation sont stockés dans une mémoire de données d'outil de la commande de la machine à coulée, et en ce qu'au moyen de ce programme d'optimisation, de façon successive, à chaque fois un jeu de données est transmis de la mémoire de données, de façon automatique, à la commande de la machine, sans intervention manuelle externe et sans arrêt de la machine, et un nombre prédéfini de cycles de coulée d'essai est réalisé avec ce jeu de données, en ce que les produits réalisés dans les cycles d'essai avec un jeu de données sont contrôlés, par mesure, en ce qui concerne leur qualité et sont évalués par un contrôle de qualité automatique, et en ce que l'on utilise des jeux de données de paramètres optimaux d'une série de valeurs mesurées, pour la fabrication ultérieure d'éléments en série.

2. Procédé selon la revendication 1,
caractérisé en ce que les jeux de données de paramètres (D₁ à Dₙ) présentent à chaque fois un nombre prédéterminé de paramètres individuels (p₁ à p₇) qui réalisent à chaque fois dans une étape de programme (1 à n) du programme d'optimisation un nombre déterminé et prédéfini de cycles de coulée.

3. Procédé selon l'une des revendications 1 ou 2,
caractérisé en ce que les jeux de données (D₁ à Dₙ) mis en oeuvre au moyen du programme d'optimisation, entraînent des produits d'essai qui sont évalués avec des procédés de mesure connus, à l'intérieur d'un fonctionnement du programme avec un jeu de données déterminé, selon des critères d'évaluation physiques prédéfinis (A,B), et en ce que les valeurs moyennes détectées (Aₘ, Bₘ) de chaque étape de programme, avec un jeu de données déterminé, donnent une indication sur la qualité du produit avec ce jeu de données.

4. Procédé selon l'une des revendications précédentes,
caractérisé en ce que l'analyse des produits réalisés avec à chaque fois un jeu de données est effectuée par l'intermédiaire d'une détermination connue de valeurs de mesure de propriétés physiques du produit, et en ce que la qualité des valeurs mesurées engendre une note d'évaluation, dont la valeur moyenne est déterminée pour chaque critère d'évaluation physique pour chaque jeu de données.

5. Procédé selon la revendication 1,
caractérisé en ce que différentes grandeurs d'influence, comme par exemple la vitesse phase 1, la vitesse phase 2, la position de déclenchement en phase 2 ou analogue, sont disponibles dans différentes valeurs graduées, qui sont regroupées à chaque fois dans toutes les combinaisons, de façon automatique par le calculateur, en un jeu de données de paramètres déterminé, et en ce que le programme d'optimisation de chacun de ces jeux combinés de données de paramètres est réalisé dans un pas de programme de façon successive, pour déterminer des valeurs optimales, sans interrompre le fonctionnement de coulée sur la machine à coulée sous pression ou analogue.

6. Procédé selon l'une des revendications précédentes,
caractérisé en ce que l'évaluation des critères d'évaluation physique (A,B) est réalisée, dans une échelle d'évaluation différente, selon la pondération du paramètre individuel, des paramètres agissant plus fortement présentant une pondération plus élevée et des paramètres agissant moins fortement présentant une pondération plus réduite.

7. Procédé selon l'une des revendications précédentes,
caractérisé en ce que le contrôle de la qualité des éléments d'essai réalisés est effectué au moyen d'un dispositif de mesure automatique pour des valeurs de mesure prédéfinies, comme la formation du retassures, la qualité superficielle, des essais de rupture, etc.

8. Procédé selon l'une des revendications précédentes,
caractérisé en ce qu'après une évaluation automatique des résultats de mesure des coulées d'essai, la fixation de champs de tolérance significatifs de la qualité est réalisée pour les paramètres de coulée.
